# EUROPEAN PATENT APPLICATION

(11) **EP 3 486 747 A1**
(43) Date of publication of application: **22.05.2019**
(21) Application number: 16910204.3
(22) Date of filing: 29.07.2016
(51) Int. Cl.: G06F 3/01, G06F 3/03, G06F 3/0488, G06F 3/0346

(54) **GESTURE INPUT METHOD FOR WEARABLE DEVICE, AND WEARABLE DEVICE**

(71) Applicant: Huawei Technologies Co., Ltd., Longgang District Shenzhen, Guangdong 518129 (CN)
(72) Inventor: YANG, Bo, Shenzhen Guangdong 518129 (CN); JIN, Qinghao, Shenzhen Guangdong 518129 (CN); ZHANG, Zeshi, Shenzhen Guangdong 518129 (CN); HE, Zhen, Shenzhen Guangdong 518129 (CN); LU, Rui, Shenzhen Guangdong 518129 (CN)
(74) Representative: Gill Jennings & Every LLP
(86) International application number: PCT/CN2016/092399
(87) International publication number: WO 2018/018624

(57) **Abstract**

The present invention relates to the field of terminal technologies, and specifically, to a gesture input method for a wearable device and a wearable device. The gesture input method includes: collecting a moving track of a user gesture motion in a track recognition area by using a sensor, where the track recognition area is an area set in a scan area preset by the sensor, and the track recognition area includes a gesture recognition area and a gesture sensing area set above the gesture recognition area; and recognizing a moving track in the gesture recognition area as input information based on area information of the track recognition area, where the area information includes coordinate system information of the track recognition area. The moving track of the user gesture motion in the gesture recognition area in the track recognition area is obtained, a position of the moving track in the coordinate system is calculated, and then the position of the moving track in the coordinate system is recognized as the input information, so that a prior-art problem of a limited operation area is resolved, and input accuracy and an applicable environment range are greatly improved because a gesture input manner is used.

## Description

### TECHNICAL FIELD

The present invention relates to the field of terminal technologies, and specifically, to a gesture input method for a wearable device and a wearable device.

### BACKGROUND

With rapid development of systems on chip (System on Chip, SOC), the systems on chip deliver higher performance while having smaller sizes, and can simultaneously integrate a plurality of functions, and therefore promote development of smart wearable devices. Some wearable devices even integrate some mobile operating systems, such as an Android operating system and an iOS operating system, and in some cases, can replace a function of a mobile phone or a tablet computer.

Currently, a wearable device has a limited operation area because of a limited structure size. Because the wearable device cannot be provided with a relatively large touchscreen and cannot be provided with a relatively large quantity of push-buttons, information is usually entered in the following manners: 1. A common phrase and an emoticon are set. The common phrase and the emoticon are directly selected from a list by means of a tap during an information reply, so as to implement information input. 2. A voice is entered. The voice is recognized as a text by using a built-in voice system, so as to implement information input. 3. A size of the wearable device is enlarged to the most extent, so as to adapt to a larger operation area, so that a larger touchscreen or more push-buttons can be designed.

However, for Manner 1, expression is limited and practicality is low; for Manner 2, a use environment is limited; and for Manner 3, wearing comfort is poor because of a large size of the wearable device, and the size can only increase by a limited magnitude because of limitation of a wearing manner. Consequently, an operation area is still relatively small.

### SUMMARY

Embodiments of the present invention provide a gesture input method for a wearable device and a wearable device, so as to resolve a problem that expression is limited because a common phrase is used for a reply on an existing wearable device, a use environment is limited because of voice input, and a size of the device is large but an operation area is still relatively small.

In view of this, a first aspect of the present invention provides a gesture input method for a wearable device. In the method, because the wearable device is provided with a sensor, an area may be selected from a scan area of the sensor as a track recognition area, and the track recognition area includes two parts: a gesture recognition area for actually recognizing a moving track and a gesture sensing area set above the gesture recognition area. Then, a moving track of a user gesture motion in the track recognition area is collected by using the sensor. Finally, a moving track collected in the gesture recognition area is recognized as input information based on area information of the track recognition area, where the area information may be coordinate system information of the track recognition area.

It can be learned that the track recognition area is set by using the sensor. A position and a size that are of the track recognition area are related to the scan area of the sensor, and the track recognition area is continuously scanned by using the sensor, so as to obtain the moving track of the user gesture motion in the gesture recognition area in the track recognition area. Then, the moving track is recognized based on the coordinate system information of the track recognition area, that is, a position of the moving track in the coordinate system is calculated, and then the position of the moving track in the coordinate system is recognized as the input information. Because the track recognition area is set based on the scan area of the sensor, the size of the track recognition area may be independently set, so that a size of an operation area of the input information may also be independently defined. Therefore, a prior-art problem of a limited operation area is resolved, and input accuracy and an applicable environment range are greatly improved because a gesture input manner is used.

In some embodiments, because the scan area of the sensor is invisible, to better help a user perform a gesture motion in an accurate area, a display may be disposed on the wearable device, the moving track in the track recognition area is synchronously mapped to the display, and a position in the track recognition area is corresponding to a position on the display, so that the gesture motion is more intuitive, and information input is more easily implemented by means of the gesture motion.

In some embodiments, the sensor may recognize only the moving track in the gesture recognition area without recognizing a moving track in an entire track recognition area. In this case, during recognition of the input information, area information of the gesture recognition area is first determined based on the area information of the track recognition area, and then the moving track is recognized based on the area information of the gesture recognition area. It can be learned that only the moving track in the gesture recognition area needs to be directly recognized, so that gesture recognition efficiency can be improved.

In some embodiments, information is entered by means of two-dimensional recognition, such as a character and a text. A process of recognizing the moving track as the input information may be: first determining a recognition reference surface based on the area information of the gesture recognition area, where the recognition reference surface is used as a final reference plane for the two-dimensional recognition, then projecting the moving track in the gesture recognition area onto the recognition reference surface, and finally recognizing content of the recognition reference surface, so that the input information is recognized. Because three-dimensional spatiality of the moving track is generally considered in the gesture recognition area, that is, input cannot be performed only on one plane, three-dimensional space is designed to accommodate a three-dimensional moving track, but during actual recognition of the moving track, the three-dimensional moving track also needs to be converted to a two-dimensional moving track by means of projection. Therefore, the recognition reference surface is set to recognize the moving track by means of cooperation, so as to improve track recognition efficiency.

In some embodiments, the moving track may also be recognized in the gesture sensing area. However, a moving track in the gesture sensing area does not need to be recognized, and only a cursor needs to be displayed in a corresponding position on the display based on a position of the moving track, so as to give the user a more friendly input prompt.

In some embodiments, the gesture recognition area and the gesture sensing area are in contact with each other, and both the areas are located above the wearable device. Therefore, the moving track arrives at the gesture recognition area through the gesture sensing area. The gesture sensing area is a pen-up area of a writing operation, and the gesture recognition area is a pen-down writing area of the writing operation, so that a real pen-up area and a real pen-down writing area can be simulated because the gesture recognition area and the gesture sensing area are in contact with each other, and input efficiency of the gesture input method can be improved because there is no need to re-adapt to a new input habit.

In some embodiments, the gesture recognition area and the gesture sensing area not only may be above the wearable device, but also may be obliquely located above or located on a side of the wearable device, provided that the gesture recognition area and the gesture sensing area are within the scan range of the sensor. In this manner, scalability of the gesture input method can be improved.

In some embodiments, in addition to being set above the wearable device as a suspension input manner, the gesture recognition area may be set to be a recognition surface. Specifically, during recognition, the moving track on a first recognition surface is recognized as the input information based on the area information of the gesture recognition area, and the first recognition surface may be a plane or a curved surface. The first recognition surface may overlap a surface of an object, so that a writing operation performed by the user on the surface of the object can be recognized as the input information, and feasibility of the gesture input method can be improved. In addition, the plane or the curved surface can be set to meet different shapes of surfaces of objects and improve scalability of the gesture input method.

In some embodiments, because the surface of the object moves relative to the wearable device, there is an included angle between the first recognition surface and the surface of the object, thereby affecting gesture input. In this case, a preset recognition surface may be set, where the preset recognition surface is a recognition surface obtained when the first recognition surface overlaps the surface of the object, that is, an optimal recognition surface. When there is a relative motion between the wearable device and the object, there is an included angle between the first recognition surface and the preset recognition surface. When the included angle exceeds a preset angle threshold, an effect of the gesture input becomes worse. In this case, a prompt is sent to prompt that the first recognition surface needs to be adjusted.

In some embodiments, the wearable device is a wrist wearable device, and the first recognition surface is located on a hand back of a wearer of the wearable device. In this setting, because a size of the hand back used as a writing area is sufficient, the first recognition surface is directly set on the hand back, so that the user can perform gesture input.

In some embodiments, the sensor may be a sensor group including one or more sensors, and a type of the sensor may be an ultrasonic sensor or an infrared sensor. It may be understood that track collection accuracy can be improved by means of combining a plurality of sensors, so as to improve recognition efficiency. The ultrasonic sensor or the infrared sensor may be selected based on an actual case.

A second aspect of the embodiments of the present invention further provides a wearable device, where the wearable device includes two parts: a sensor and a recognition module. The sensor is configured to collect a moving track of a user gesture motion in a track recognition area, where the track recognition area is an area set in a scan area preset by the sensor, and the track recognition area includes a gesture recognition area and a gesture sensing area set above the gesture recognition area; and the recognition module is configured to recognize a moving track in the gesture recognition area as input information based on area information of the track recognition area, where the area information includes coordinate system information of the track recognition area.

It may be understood that because the track recognition area is set based on the scan area of the sensor, a size of the track recognition area may be independently set, so that a size of an operation area of the input information may also be independently defined. Therefore, a prior-art problem of a limited operation area is resolved, and input accuracy and an applicable environment range are greatly improved because a gesture input manner is used.

In some embodiments, because the scan area of the sensor is invisible, to better help a user perform a gesture motion in an accurate area, the wearable device further includes a display, configured to synchronously map the moving track in the track recognition area to the display, where the track recognition area is corresponding to an area on the display, so that the gesture motion is more intuitive, and information input is more easily implemented by means of the gesture motion.

In some embodiments, the sensor may recognize only the moving track in the gesture recognition area without recognizing a moving track in an entire track recognition area. In this case, the sensor actually collects the moving track in the gesture recognition area in the track recognition area. In this case, the recognition module first determines area information of the gesture recognition area based on the area information of the track recognition area, and then recognizes the moving track in the gesture recognition area as the input information based on the area information of the gesture recognition area. Because a to-be-recognized area becomes small, recognition efficiency can be improved.

In some embodiments, information is entered by means of two-dimensional recognition, such as a character and a text. Therefore, an actual recognition process of the recognition module may be: first determining a recognition reference surface based on the area information of the gesture recognition area, then projecting the moving track in the gesture recognition area onto the recognition reference surface, and finally recognizing the moving track projected onto the recognition reference surface as the input information. Because three-dimensional spatiality of the moving track is generally considered in the gesture recognition area, that is, input cannot be performed only on one plane, three-dimensional space is designed to accommodate a three-dimensional moving track, but during actual recognition of the moving track, the three-dimensional moving track also needs to be converted to a two-dimensional moving track by means of projection. Therefore, the recognition reference surface is set to recognize the moving track by means of cooperation, so as to improve track recognition efficiency.

In some embodiments, the moving track may also be recognized in the gesture sensing area. However, a moving track in the gesture sensing area does not need to be recognized, and only a cursor needs to be displayed in a corresponding position on the display based on a position of the moving track. In this case, the sensor is further specifically configured to detect the moving track in the gesture sensing area; and the display is further configured to display the cursor in a current position that is on the display and that is corresponding to the moving track in the gesture sensing area. In this manner, a more friendly input prompt can be given to the user.

In some embodiments, the gesture recognition area and the gesture sensing area are in contact with each other, and both the areas are located above the wearable device. Therefore, the moving track arrives at the gesture recognition area through the gesture sensing area. The gesture sensing area is a pen-up area of a writing operation, and the gesture recognition area is a pen-down writing area of the writing operation, so that a real pen-up area and a real pen-down writing area can be simulated because the gesture recognition area and the gesture sensing area are in contact with each other, and input efficiency of a gesture input method can be improved because there is no need to re-adapt to a new input habit.

In some embodiments, in addition to being set above the wearable device as a suspension input manner, the gesture recognition area may be set to be a recognition surface. The gesture recognition area is a first recognition surface established based on the area information of the gesture recognition area. In this case, the recognition module is specifically configured to recognize a moving track on the first recognition surface as the input information based on the area information of the gesture recognition area, where the first recognition surface is a plane or a curved surface. The first recognition surface may overlap a surface of an object, so that a writing operation performed by the user on the surface of the object can be recognized as the input information, and feasibility of the gesture input method can be improved. In addition, the plane or the curved surface can be set to meet different shapes of surfaces of objects and improve scalability of the gesture input method.

In some embodiments, because the surface of the object moves relative to the wearable device, there is an included angle between the first recognition surface and the surface of the object, thereby affecting gesture input. To resolve this problem, the wearable device further includes a prompt module, configured to: when it is determined that an included angle between the first recognition surface and a preset recognition surface exceeds a preset angle threshold, send a prompt for adjusting the first recognition surface. When there is a relative motion between the wearable device and the object, there is an included angle between the first recognition surface and the preset recognition surface. When the included angle exceeds the preset angle threshold, an effect of the gesture input becomes worse. In this case, the prompt is sent to prompt that the first recognition surface needs to be adjusted.

In some embodiments, the wearable device is a wrist wearable device, and the first recognition surface is located on a hand back of a wearer of the wearable device. In this setting, because a size of the hand back used as a writing area is sufficient, the first recognition surface is directly set on the hand back, so that the user can perform gesture input.

In some embodiments, the sensor may be a sensor group including one or more sensors, and a type of the sensor may be an ultrasonic sensor or an infrared sensor. It may be understood that track collection accuracy can be improved by means of combining a plurality of sensors, so as to improve recognition efficiency. The ultrasonic sensor or the infrared sensor may be selected based on an actual case.

A third aspect of the embodiments of the present invention further provides a wearable device, where the wearable device includes a sensor, a processor, and a memory. The sensor is configured to collect a moving track of a user gesture motion, the memory is configured to store an instruction and data that need to be executed by the processor, and the processor is configured to execute the instruction in the memory, so as to recognize a moving track in a gesture recognition area as input information.

### BRIEF DESCRIPTION OF DRAWINGS

FIG. 1 is a schematic diagram of collecting linear distances in a gesture input method for a wearable device according to an embodiment of the present invention;
FIG. 2 is a schematic diagram of collecting plane distances in a gesture input method for a wearable device according to an embodiment of the present invention;
FIG. 3 is a schematic diagram of collecting space distances in a gesture input method for a wearable device according to an embodiment of the present invention;
FIG. 4 is a diagram of an embodiment of a gesture input method for a wearable device according to an embodiment of the present invention;
FIG. 5 is a diagram of another embodiment of a gesture input method for a wearable device according to an embodiment of the present invention;
FIG. 6 is a diagram of another embodiment of a gesture input method for a wearable device according to an embodiment of the present invention;
FIG. 7 is a diagram of another embodiment of a gesture input method for a wearable device according to an embodiment of the present invention;
FIG. 8 is a diagram of another embodiment of a gesture input method for a wearable device according to an embodiment of the present invention;
FIG. 9 is a diagram of another embodiment of a gesture input method for a wearable device according to an embodiment of the present invention;
FIG. 10 is a diagram of another embodiment of a gesture input method for a wearable device according to an embodiment of the present invention;
FIG. 11 is a diagram of another embodiment of a gesture input method for a wearable device according to an embodiment of the present invention;
FIG. 12 is a diagram of another embodiment of a gesture input method for a wearable device according to an embodiment of the present invention;
FIG. 13 is a diagram of an embodiment of a gesture input method for a wearable device according to an embodiment of the present invention;
FIG. 14 is a diagram of an embodiment of a wearable device according to an embodiment of the present invention; and
FIG. 15 is a diagram of an embodiment of a wearable device according to an embodiment of the present invention.

### DESCRIPTION OF EMBODIMENTS

Embodiments of the present invention provide a gesture input method for a wearable device and a wearable device, so as to resolve a problem that expression is limited because a common phrase is used for a reply on an existing wearable device, a use environment is limited because of voice input, and a size of the device is large but an operation area is still relatively small.

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

Details are separately described below.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein.

Information input of a wearable device is a major impediment to development of the wearable device. Currently, because of inconvenience of input, the wearable device is still a tool for assisting other portable terminals, for example, assisting a mobile phone and assisting a tablet computer. Actually, the wearable device has been able to replace these portable terminals in some functions, for example, replace the mobile phone to send an SMS message and replace the tablet computer to enter some texts.

Currently, some input manners are as follows: For example, frequently-used content is used for a quick reply. The content is only preset fixed content, and the content needs to be edited by using a terminal that performs a communication connection to the wearable device. However, the content is generally a relatively simple common phase, and can only be used for the quick reply. Consequently, expression is extremely limited and practicality is relatively low. For another example, voice input is used. However, a use effect is relatively poor in a noisy environment because of a characteristic of the voice input, and the voice input is inconvenient for use in a public environment because of a privacy requirement. Consequently, there are great limitations. In addition, a size of the wearable device is relatively enlarged, for example, a relatively large watch face is disposed on a smart watch. However, because of a limited product characteristic of the watch, even if a size of the watch is enlarged to the most extent, compared with a terminal device such as a mobile phone, the watch is still relatively small, and cannot be provided with a large enough touchscreen or provided with enough push-buttons for content input.

The foregoing problems are caused by cramped design space of the wearable device. Therefore, how to design a set of information input manners suitable for this case if space is relatively cramped is particularly important for the wearable device.

To resolve the foregoing problems, in this embodiment of the present invention, input information is recognized by scanning a moving track of a gesture motion by a sensor. In this manner, a sensor group that can scan the moving track is added based on an existing wearable device. Tracks in preset space are captured and the tracks are used as input tracks of a user, and these tracks are recognized, so as to obtain corresponding input characters.

In this embodiment of the present invention, the sensor group is mainly an ultrasonic sensor of an ultrasonic technology, an infrared sensor of an infrared technology, or a sensor group including both an ultrasonic sensor and an infrared sensor. A measurement reference point and basic coordinate information are set, and then a moving track of a gesture in the coordinate area is captured, so as that capture of the track can be implemented. The following separately describes principles of collecting tracks in one-dimensional, two-dimensional, and three-dimensional cases.

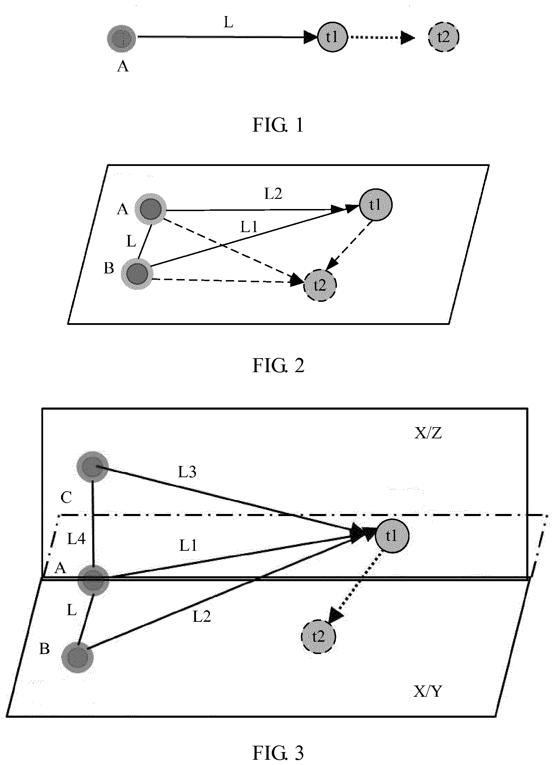

For Case 1, that is, the one-dimensional linear case, referring to FIG. 1, FIG. 1 is a schematic diagram of collecting linear distances in a gesture input method for a wearable device according to an embodiment of the present invention. A sensor group in FIG. 1 may only include a sensor A, that is, at least one sensor is used to collect the distances in the one-dimensional case. The sensor A transmits an infrared light ray or an ultrasonic wave, measures a time at which the infrared light ray or the ultrasonic wave returns after encountering an obstacle, may obtain a distance between the sensor A and a measured object based on the returned time by means of calculation, and obtains distances between the sensor A and the measured object at two different moments t1 and t2 by means of recording, so as to obtain, by means of calculation, a distance for which the measured object moves along a linear direction in a time period t2-t1.

For Case 2, that is, the two-dimensional plane case, referring to FIG. 2, FIG. 2 is a schematic diagram of collecting plane distances in a gesture input method for a wearable device according to an embodiment of the present invention. If an X-axis and a Y-axis in a plane are determined, a sensor B is added to the sensor group based on FIG. 1, that is, at least two sensors are used to collect the distances in the two-dimensional case, and a distance L between the sensor A and the sensor B is known. During measurement of the measured object, the sensor A and the sensor B respectively measure a distance L1 between the sensor A and the measured object and a distance L2 between the sensor B and the measured object, and measure distances between the sensor A and the measured object and distances between the sensor B and the measured object at different moments t1 and t2, so as to obtain, by means of calculation, offsets of the measured object in X-axis and Y-axis directions in the plane by using data L11 and L21 at the moment t1 and data L12 and L22 at the moment t2 with reference to the distance L, and determine a moving track of the measured object in the plane by means of continuous measurement.

For Case 3, that is, the three-dimensional space case, referring to FIG. 3, FIG. 3 is a schematic diagram of collecting space distances in a gesture input method for a wearable device according to an embodiment of the present invention. If an X-axis, a Y-axis, and a Z-axis in space are determined, a sensor C is added to the sensor group based on FIG. 2, that is, at least three sensors are used to collect the distances in the three-dimensional case, and the sensor A, the sensor B, and the sensor C are not collinear. A distance between the sensor A and the sensor B, a distance between the sensor A and the sensor C, and a distance between the sensor B and the sensor C are known, and a distance between the sensor A and the measured object, a distance between the sensor B and the measured object, and a distance between the sensor C and the measured object are respectively L1, L2, and L3. Distances between the sensor A and the measured object, distances between the sensor B and the measured object, and distances between the sensor C and the measured object at different moments t1 and t2 are measured, so as to obtain, by means of calculation, offsets of the measured object in X-axis, Y-axis, and Z-axis directions in the three-dimensional space in a time period from t1 to t2 by using data L11, L21, and L31 at the moment t1 and data L12, L22, and L32 at the moment t2 with reference to the fixed distances between the sensors, and determine a moving track of the measured object in the three-dimensional space by means of continuous measurement.

It should be noted that, for ease of calculation, the sensor A may be disposed at a junction between an X/Z plane and an X/Y plane, the sensor B may be disposed in the X/Y plane, and the sensor C may be disposed in the X/Z plane. In this case, the sensor A and the sensor B can obtain, by means of measurement, offsets of the measured object in the X-axis and Y-axis directions in the time period from t1 to t2, and the sensor A and the sensor C can obtain, by means of measurement, offsets of the measured object in the X-axis and Z-axis directions in the time period from t1 to t2, so as to obtain the offsets of the measured object in the X-axis, the Y-axis, and the Z-axis.

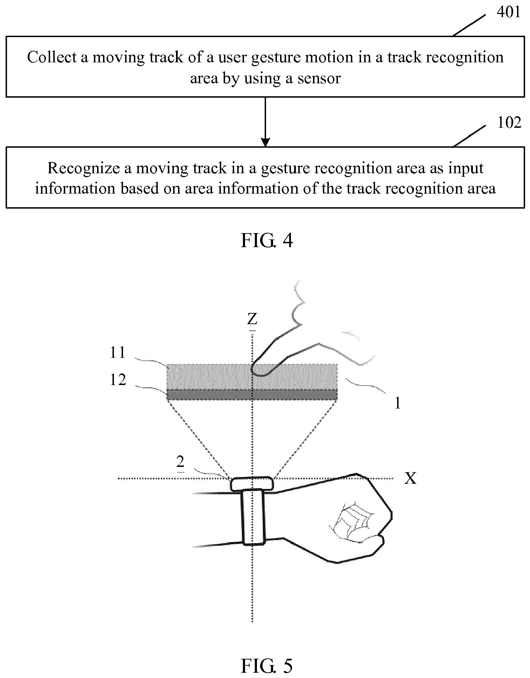

Specifically, referring to FIG. 4, FIG. 4 is a diagram of an embodiment of a gesture input method for a wearable device according to an embodiment of the present invention. The method may include the following steps.

401. Collect a moving track of a user gesture motion in a track recognition area by using a sensor.

The track recognition area is an area set in a scan area preset by the sensor, and the track recognition area includes a gesture recognition area and a gesture sensing area set above the gesture recognition area.

It may be understood that a quantity of sensors differs based on a minimum quantity required for the foregoing three cases. The preset scan area is first set based on a case during measurement. In addition, because of irregularities of areas in which the sensor can perform collection and different collection accuracy in different areas, an area with relatively high collection accuracy may be selected from the scan area of the sensor as the track recognition area for track recognition. In addition, the track recognition area is set to be an area that includes the gesture recognition area and the gesture sensing area set above the gesture recognition area, so as to simulate pen-up and pen-down operations in a real writing case. The gesture sensing area may be used to simulate a pen-up operation area, and the gesture recognition area may be used to simulate a pen-down writing operation area.

Optionally, the sensor may be a sensor group including a plurality of sensors, and a sensor in the sensor group may be mainly an ultrasonic sensor of an ultrasonic technology, an infrared sensor of an infrared technology, or a sensor group including both an ultrasonic sensor and an infrared sensor. A returned time at which an infrared light ray or an ultrasonic wave is from being transmitted to encountering an obstacle is calculated by means of measurement, to calculate a distance between the sensor and the obstacle, that is, a measured object. Because transmission speeds of the infrared light ray and the ultrasonic wave are very high and are far higher than a moving speed of the measured object, compared with a moving distance of the measured object in a moving process, a distance for which the measured object moves in the returned time at which the infrared light ray or the ultrasonic wave is from being transmitted to encountering the measured object is negligible.

It should be noted that a gesture input manner may be a writing manner. It is determined by a characteristic of the writing manner that there are two types of operations: a pen-up operation and a pen-down operation, and only a part of the pen-down operation is a part that needs to be actually recognized. Therefore, the track recognition area of the sensor needs to be divided into two different areas for the two cases, that is, an area corresponding to the pen-up operation and an area corresponding to the pen-down operation. The pen-down operation area is referred to as the gesture recognition area, and all moving tracks in the gesture recognition area are used as a basis for being subsequently recognized as input information; and the gesture sensing area may be used as the pen-up operation area.

It should be noted that the gesture sensing area and the gesture recognition area may be set to further implement an input operation similar to that of a mouse by means of cooperation, for example, an operation of entering the gesture sensing area by a fingertip is used as a left-click operation of the mouse, an operation of continuously entering the gesture sensing area twice in a preset shorter time is used as a left-double-click operation, an operation of entering the gesture recognition area is a right-click operation of the mouse, an operation of maintaining the fingertip in the gesture sensing area for a preset time is a touch and hold operation or an outgoing call menu operation, and an operation of simultaneously entering the gesture sensing area by a plurality of fingertips may be used as a multi-touch operation. It can be learned that because the two areas are set, a plurality of types of input operations can be implemented by properly defining the two areas.

It may be understood that, in addition to being able to simulate a left-click, a left-double-click, and a right-click that are of the mouse, the input operation may also be an operation on a touchscreen, that is, may be a touch operation, such as tap touch, double-tap touch, touch and hold, or multi-touch input.

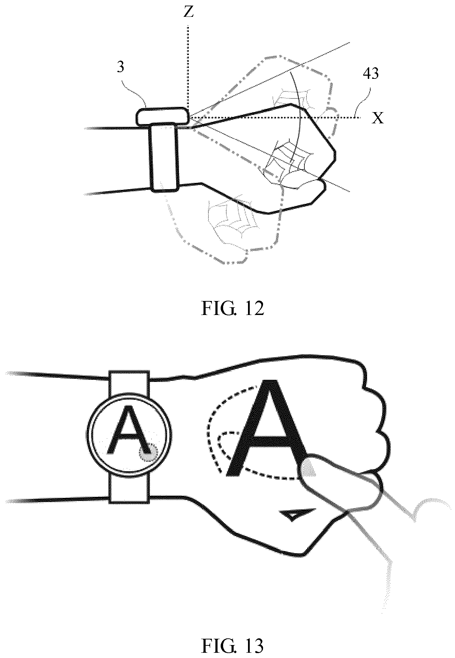

Optionally, in an input process, the moving track may be synchronously mapped to a display of the wearable device, and the track recognition area is corresponding to an area on the display, so as to help a user recognize information that is being entered. Referring to FIG. 13, FIG. 13 is a diagram of an embodiment of a gesture input method for a wearable device according to an embodiment of the present invention. The display of the wearable device in FIG. 13 displays information entered by a user on a hand back that is of the user that is used as the track recognition area, and content of the display is corresponding to content of the track recognition area. Because when the track recognition area is divided into the gesture sensing area and the gesture recognition area, if a moving track is located in the gesture sensing area at a current moment, a cursor is displayed in a corresponding position on the display; or if a moving track is located in the gesture recognition area at a current moment, a recognized writing track is also displayed on the display in addition to displaying a cursor in a corresponding position on the display. As shown in the figure, a dashed line indicates a moving track in the gesture sensing area, and a thick solid line indicates a moving track in the gesture recognition area. The display of the wearable device also maps the moving track in the gesture recognition area. In addition, a finger position in the gesture sensing area is corresponding to a position of the cursor on the display.

It may be understood that, to enhance input experience of a user, during a writing operation, the wearable device may give operation feedback to the user by changing a status of a buoy graphic such as a cursor on the display, for example, give the operation feedback by using buoy graphics with different sizes, different transparencies, different virtual and physical degrees, and the like, and certainly, may also use sound or vibration as the operation feedback for distinguishing a pen-up action from a pen-down action, so as to assist the user with an operation and enhance the input experience of the user.

It should be noted that, for a gesture operation, in addition to a fingertip, a column object similar to the fingertip may be used for an operation.

Certainly, in addition to dividing the track recognition area into the two areas, an entire track recognition area may also be used as the gesture recognition area, and the non-track recognition area may be used as a pen-up operation area. In the two cases, whether continuous input is performed is determined. In a former case of dividing the area, because the pen-up operation area is also the track recognition area, it indicates that input is not completed, provided that the moving track is still in the area. In a latter case, because no track recognition area is used as a sensing condition, a feasible manner is to increase a delay. It is determined that an input operation is completed when a time at which the moving track leaves the track recognition area reaches a preset time, and it indicates that the input is not completed if the moving track enters the track recognition area again in the preset time.

Optionally, a purpose of setting the gesture sensing area is to: display a cursor in a current position that is on the display of the wearable device and that is corresponding to the moving track in the gesture sensing area, provided that the moving track is detected in the area. Certainly, the gesture sensing area may alternatively be used as the pen-up operation area; that is, in a writing process, it is determined that the writing process is not interrupted, provided that the moving track does not leave the gesture sensing area.

Optionally, the gesture recognition area and the gesture sensing area may be in contact with each other, and because the track recognition area is determined by a scan area of the sensor, the track recognition area may be set in any orientation of the wearable device, such as above the wearable device or around the top of the wearable device, for example, on a hand back or an arm of the user. A position of the track recognition area may be set based on an actual requirement. In addition, a size of the track recognition area may also be independently set for different wearable devices, so as to meet requirements of different users for a size of a writing area.

For example, the wearable device is a wristband or a watch. A writing area of the wristband or the watch may be directly set on a hand back of a hand on which the wristband or the watch is worn. A sensor on the wristband or the watch first covers a scan area to the hand back, and predefines an area similar to a surface of the hand back in the scan area by using a coordinate system. Certainly, the sensor may alternatively scan the hand back of a user in real time, may determine, from the scan area by using hand back data obtained by means of scanning, a gesture recognition area corresponding to the hand back, where the gesture recognition area can basically overlap the hand back in space, and then may set a gesture sensing area whose shape is similar to that of the gesture recognition area above the gesture recognition area.

Certainly, for another object, a gesture recognition area and a gesture sensing area may also be set based on a surface of the object with reference to the foregoing manner.

For another example, the wearable device is a pair of glasses or a head-mounted wearable device. In this case, a gesture recognition area may be set at a specific distance in front of a user, and to facilitate an operation of the user, the area may be set in a position of an upper body of the user. In addition, because the wearable device has a transparent display, an area icon may be directly set on the transparent display, and space seen inside the area icon is used as a track recognition area.

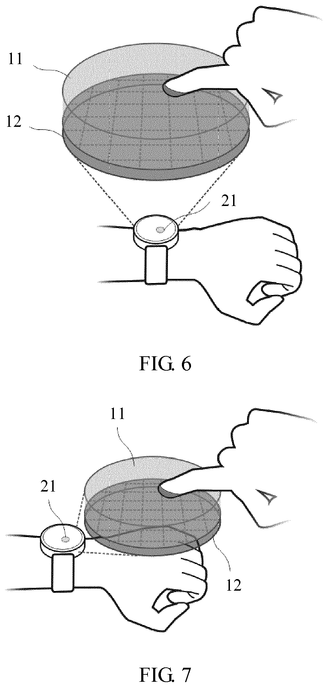

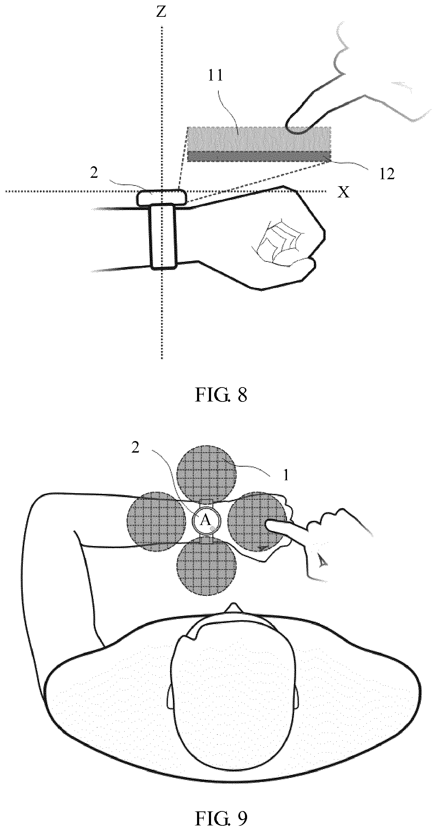

For example, referring to FIG. 5 to FIG. 8, FIG. 5 is a diagram of another embodiment of a gesture input method for a wearable device according to an embodiment of the present invention; FIG. 6 is a diagram of another embodiment of a gesture input method for a wearable device according to an embodiment of the present invention; FIG. 7 is a diagram of another embodiment of a gesture input method for a wearable device according to an embodiment of the present invention; and FIG. 8 is a diagram of another embodiment of a gesture input method for a wearable device according to an embodiment of the present invention. In FIG. 5 to FIG. 8, a light-color area part of a track recognition area 1 is a gesture sensing area 11, and a dark-color area part is a gesture recognition area 12, and the gesture sensing area 11 and the gesture recognition area 12 are in contact with each other. In addition, the gesture recognition area 12 and the gesture sensing area 11 are located above the wearable device 2 in FIG. 5 and FIG. 6 and located above a side of the wearable device 2 in FIG. 7 and FIG. 8. When a finger of a user enters the gesture sensing area 11, a display 21 of the wearable device 2 displays a corresponding position of the finger of the user in the gesture sensing area 11 in a cursor manner. When a finger of a user the gesture recognition area 12, a display 21 of the wearable device 2 not only displays a corresponding position of the finger of the user in the gesture sensing area 11, but also displays a current writing process of the user.

In addition, referring to FIG. 9, FIG. 9 is a diagram of another embodiment of a gesture input method for a wearable device according to an embodiment of the present invention. A track recognition area may be located above a side of the wearable device, and a plurality of positions may be simultaneously set in the track recognition area, so that a user can smoothly perform an operation in each application scenario.

In the foregoing case, step 401 is specifically:
collecting the moving track in the gesture recognition area in the track recognition area by using the sensor.

It can be learned that, in this case, a track collected by the sensor is mainly a track in the gesture recognition area instead of a track in an entire track recognition area. In this manner, a part of calculation amount can be reduced, thereby improving track recognition performance.

402. Recognize a moving track in the gesture recognition area as input information based on area information of the track recognition area.

The area information includes coordinate system information of the track recognition area.

It may be understood that the area information needs to be preset for the track recognition area, so as to correctly recognize a direction of the moving track, that is, offset information. The area information may include the coordinate system information of the track recognition area, and because the gesture recognition area is an area set in the track recognition area, after the coordinate system information of the track recognition area is determined, coordinate system information of the gesture recognition area may be determined, so that both the direction of the moving track and an offset are calculated based on the coordinate system.

Optionally, if the track recognition area is divided into the gesture recognition area and the gesture sensing area, step 402 may be specifically:
determining area information of the gesture recognition area based on the area information of the track recognition area; and
recognizing the moving track in the gesture recognition area as the input information based on the area information of the gesture recognition area. It can be learned that, in this case, there is no need to recognize an entire track recognition area, but only the gesture recognition area in the track recognition area needs to be recognized to complete recognition of the input information, and because only one area is recognized, recognition interference is relatively small, so that both recognition accuracy and a recognition rate are enhanced.

A specific recognition process of the gesture recognition area may specifically include the following content:
a. Determine a recognition reference surface based on the area information of the gesture recognition area.
   It may be understood that the recognition reference surface may be used as a paper surface in a paper writing process and is also a default writing surface of a user in a writing process. Because the gesture recognition area is three-dimensional space, after the moving track in the space is obtained, the moving track needs to be processed to obtain a track on the recognition reference surface, that is, a final required moving track.
b. Project the moving track in the gesture recognition area onto the recognition reference surface.
   The moving track needs to be projected onto the recognition reference surface, so that moving track in the gesture recognition area can be accurately recognized as the input information, so as to obtain an accurate moving track on the recognition reference surface.
c. Recognize the moving track projected onto the recognition reference surface as the input information.

After the foregoing step a and step b are completed, the moving track projected onto the recognition reference surface may be recognized, so as to recognize desired input information by using the moving track.

It should be noted that in addition to the foregoing manner of dividing the track recognition area into the gesture sensing area and the gesture recognition area, the track recognition area may be implemented in the following manner.

Optionally, the track recognition area includes a first recognition surface established based on the coordinate system, and the recognizing a moving track as input information based on area information of the track recognition area includes:
recognizing a moving track on the first recognition surface as the input information based on the area information of the first recognition surface, where the first recognition surface is a plane or a curved surface.

That is, in this case, a part that is actually used for recognition in the track recognition area is not an area but a surface, that is, the first recognition surface, and the first recognition surface may be the plane or the curved surface. A purpose of this manner is to distinguish from the foregoing suspension gesture input manner of obtaining the gesture sensing area and the gesture recognition area by means of division. In this manner, a surface that is actually used for recognition may be projected onto a surface of an object, so as to obtain more real writing experience.

It should be noted that the first recognition surface may be set on surfaces of some objects. For example, when the wearable device is a smart watch or a smart band, the first recognition surface is set on a hand back of a user, a fingertip of the user or another column object similar to the fingertip is used as a stylus, and the first recognition surface is used as a writing reference surface. When a distance between the stylus and the first recognition surface is greater than 0 mm, it is considered as a pen-up operation; or when a distance between the stylus and the first recognition surface is less than or equal to 0 mm, it is considered as a pen-down operation. Because the hand back of a human body is a flexible surface, the distance between the stylus and the first recognition surface is less than 0 mm. In addition, a predetermined margin may also be reserved when a distance of the pen-up operation is set. For example, when the distance between the stylus and the first recognition surface is greater than 2 mm, it is considered as the pen-up operation, and when the distance between the stylus and the first recognition surface is less than or equal to 2 mm, it is considered as the pen-down operation. The margin may be independently set or may be set based on a shape of a surface of an object and a size of the first recognition surface.

In addition, optionally, similar to the foregoing combination of the gesture recognition area and the gesture sensing area, in addition to the first recognition surface, a second recognition area may be set in the track recognition area. The second recognition area is in contact with the first recognition surface, and a function of the second recognition area is similar to the function of the gesture sensing area in the foregoing case. The second recognition area can not only be used as a pen-up area, but also used to determine a position of current gesture input in an input area to be reflected on the wearable device, that is, a cursor position on a display.

Optionally, in addition to the first recognition surface, a preset recognition surface may be set. Because the wearable device performs an input operation in a wearing process, an object inevitably moves at a specific angle relative to the wearable device during use. Consequently, a size of the first recognition surface projected onto the object changes. If a moving magnitude is excessively large, an input track may be inaccurately recognized. Therefore, the preset recognition surface is set. After an included angle between the first recognition surface and the preset recognition surface exceeds a specific value, an adjustment prompt is sent, so as to ensure that the input operation can be performed on the first recognition surface in a high-accuracy input environment.

The included angle between the first recognition surface and the preset recognition surface may be calculated in a plurality of manners. The following describes one of the manners. For a surface of an object, because the wearable device moves at different angles, a size of an area projected by the first recognition surface on the surface of the object changes. An included angle between a current first recognition surface and a fixed preset recognition surface may be obtained based on a degree of a size change by means of calculation.

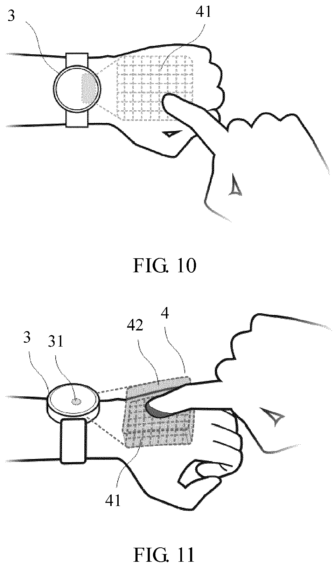

For example, referring to FIG. 10 to FIG. 12, FIG. 10 is a diagram of another embodiment of a gesture input method for a wearable device according to an embodiment of the present invention; FIG. 11 is a diagram of another embodiment of a gesture input method for a wearable device according to an embodiment of the present invention; and FIG. 12 is a diagram of another embodiment of a gesture input method for a wearable device according to an embodiment of the present invention. As shown in FIG. 10, the wearable device 3 is a wrist wearable device, and a first recognition surface 41 of a track recognition area 4 is located on a hand back of a wearer of the wearable device 3.

In addition, as shown in FIG. 11, the track recognition area 4 further includes a second recognition area 42, and the second recognition area 42 is in contact with the first recognition surface 41. In this case, a track of an operation performed by a user in the second recognition area 42 is mapped to a display of the wearable device 3, and a current position of the track is mapped to a position of a cursor 31 on the display. In addition, it is considered as a pen-up operation, provided that the second recognition area 42 is not in contact with the hand back, and it is considered as a pen-down operation only when the second recognition area 42 is in contact with the hand back, that is, in contact with the first recognition surface 41.

In addition, FIG. 12 schematically shows the foregoing recognition reference surface 43 and an included angle between the first recognition surface 41 and the recognition reference surface 43. In the figure, the recognition reference surface may be an X/Y plane perpendicular to a Z-axis. A prompt for adjusting the first recognition surface 41 is not sent, provided that the included angle between the first recognition surface 41 and the X/Y plane is within a preset range, that is, the included angle is in an accurate area. If the included angle between the first recognition surface 41 and the X/Y plane is beyond a preset range, a prompt for adjusting the first recognition surface 41 is sent to indicate that a user needs to adjust the hand back, so as to achieve an optimal writing effect.

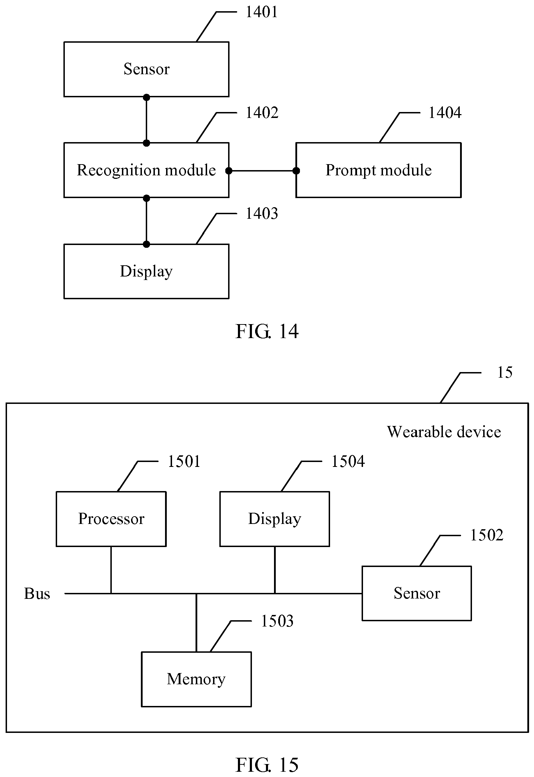

The foregoing describes the gesture input method for a wearable device in the embodiment of the present invention, and the following describes a wearable device in an embodiment of the present invention. Referring to FIG. 14, FIG. 14 is a diagram of an embodiment of a wearable device according to an embodiment of the present invention. The wearable device 14 includes a sensor 1401 and a recognition module 1402.

The sensor 1401 is configured to collect a moving track of a user gesture motion in a track recognition area, where the track recognition area is an area set in a scan area preset by the sensor, and the track recognition area includes a gesture recognition area and a gesture sensing area set above the gesture recognition area.

The sensor 1401 can implement step 401 in the embodiment shown in FIG. 4.

In addition, the sensor 1401 may be a sensor group including a plurality of sensors. A type of the sensor may be an ultrasonic sensor or an infrared sensor. Specifically, a description of forming the sensor group by a plurality of sensors 1401 is similar to that of step 401 in the embodiment shown in FIG. 4, and details are not described herein again.

It should be noted that the gesture recognition area and the gesture sensing area are set to be corresponding to pen-up and pen-down operations in an actual writing process. For details, refer to the description of step 401 in the embodiment shown in FIG. 4, and details are not described herein again. Certainly, in addition to implementing the pen-up and pen-down operations, similar to the description of step 401 in the embodiment shown in FIG. 4, the gesture recognition area and the gesture sensing area may be set to implement an input operation similar to that of a mouse or a touchscreen by means of cooperation.

The recognition module 1402 is configured to recognize a moving track in the gesture recognition area as input information based on area information of the track recognition area, where the area information includes coordinate system information of the track recognition area.

It can be learned that, in this embodiment of the present invention, a working process of the wearable device may be a process that the sensor 1401 first collects the moving track of the user gesture motion in the track recognition area, in particular, the gesture recognition area, and then the recognition module 1402 recognizes a basis of the moving track as the area information of the track recognition area and recognizes the moving track in the gesture recognition area as the input information, so as to implement information input. Optionally, the wearable device further includes:
a display 1403, configured to synchronously map the moving track in the track recognition area to the display 1403, where the track recognition area is corresponding to an area on the display.

It may be understood that, similar to the description of step 401 in the embodiment shown in FIG. 4, the display 1403 of times is mainly configured to display a cursor in cooperation with the gesture sensing area. The cursor reflects a current position of a user gesture motion in the gesture sensing area, and because there is a position correspondence between the gesture sensing area and the display 1403, the current position in the gesture sensing area is also correspondingly displayed on the display 1403.

Optionally, the sensor 1401 is specifically configured to collect the moving track in the gesture recognition area in the track recognition area.

The recognition module 1402 is specifically configured to: determine area information of the gesture recognition area based on the area information of the track recognition area; and recognize the moving track in the gesture recognition area as the input information based on the area information of the gesture recognition area.

It can be learned that, similar to a description of step 402 in the embodiment shown in FIG. 4, when the moving track is actually recognized, information used to determine final input is the moving track in the gesture recognition area. Therefore, the sensor 1401 may collect only the moving track in the gesture recognition area, and the recognition module 1402 determines the area information of the gesture recognition area, that is, coordinate system information of the gesture recognition area based on the area information of the track recognition area, and recognizes the moving track in the gesture recognition area by using the coordinate system information, so as to finally obtain the input information.

Optionally, similar to alternative steps a to c of step 402 in the embodiment shown in FIG. 4, the recognition module 1402 is specifically configured to:
determine a recognition reference surface based on the area information of the gesture recognition area;
project the moving track in the gesture recognition area onto the recognition reference surface; and
recognize the moving track projected onto the recognition reference surface as the input information.

It can be learned that in a recognition process of the recognition module 1402, the recognition reference surface is first determined. The recognition reference surface may be used as a paper surface in a paper writing process and is also a default writing surface of a user in a writing process. Because the gesture recognition area is three-dimensional space, after the moving track in the space is obtained, the moving track needs to be processed to obtain a track on the recognition reference surface, that is, a final required moving track. After the recognition reference surface is determined, the moving track in the gesture recognition area is projected onto the recognition reference surface to obtain the projection track on the recognition reference surface, and finally the projection track is recognized to obtain the final input information.

It should be noted that, in this embodiment of the present invention, the gesture recognition area and the gesture sensing area that are established by using the scan area of the sensor 1401 may be set in a suspension manner, and the gesture recognition area may be a surface located on an object. Descriptions are separately provided below.
I. The gesture recognition area and the gesture sensing area may be set in a suspension manner.
   Optionally, the gesture recognition area is in contact with the gesture sensing area, and the gesture recognition area and the gesture sensing area are located above the wearable device. This setting manner may be applied to various occasions without considering a medium that carries the gesture recognition area and the gesture sensing area.
II. The gesture recognition area is the surface located on the object.

Optionally, the gesture recognition area is a first recognition surface established based on area information of the gesture recognition area, and the recognition module 1402 is specifically configured to:
recognize a moving track on the first recognition surface as the input information based on the area information of the gesture recognition area, where the first recognition surface is a plane or a curved surface.

It can be learned that, in this case, the gesture recognition area may be a recognition surface set on the surface of the object, and the recognition surface basically overlaps the surface of the object, so that a user can perform an input operation on the surface of the object by means of writing, and a sense of reality of the writing can be greatly enhanced. A description of the first recognition surface is similar to that of step 402 in the embodiment shown in FIG. 4. In addition, for a description of information about the first recognition surface, refer to a writing example of using the wearable device as the smart watch or the smart band in the description of step 402 in the embodiment shown in FIG. 4, and details are not described herein again.

Optionally, because there is usually a relative motion between the wearable device and the surface of the object, accuracy of gesture input may be affected. Therefore, correction may be performed by setting a preset recognition surface. Optionally, the wearable device 14 may further include a prompt module 1404, configured to: when it is determined that an included angle between the first recognition surface and a preset recognition surface exceeds a preset angle threshold, send a prompt for adjusting the first recognition surface.

Specifically, because the wearable device performs an input operation in a wearing process, an object inevitably moves at a specific angle relative to the wearable device during use. Consequently, a size of the first recognition surface projected onto the object changes. If a moving magnitude is excessively large, an input track may be inaccurately recognized. Therefore, the preset recognition surface is set. After an included angle between the first recognition surface and the preset recognition surface exceeds a specific value, an adjustment prompt is sent, so as to ensure that the input operation can be performed on the first recognition surface in a high-accuracy input environment.

The following describes a structure of a training device in an embodiment of the present invention. Referring to FIG. 15, FIG. 15 is a diagram of an embodiment of a wearable device according to an embodiment of the present invention. The wearable device 15 may include at least one processor 1501, at least one sensor 1502, and at least one memory 1503 that are connected to a bus. The wearable device related to this embodiment of the present invention may have more or fewer parts than those shown in FIG. 15, may combine two or more parts, or may have different part configurations or settings. Each part may be implemented in hardware that includes one or more signal processors and/or application-specific integrated circuits, in software, or in a combination of hardware and software.

Specifically, for the embodiment shown in FIG. 14, the processor 1501 can implement functions of the recognition module 1402 and the prompt module 1404 in the embodiment shown in FIG. 14; the sensor 1502 can implement a function of the sensor 1401 in the embodiment shown in FIG. 14; the memory 1503 is configured to store an instruction and data that need to be executed by the processor 1501; and the processor 1501 is configured to execute the instruction in the memory, so as to recognize a moving track in a gesture recognition area as input information. The wearable device may further include a display 1504, and the display 1504 can implement a function of the display 1403 in FIG. 14.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A gesture input method for a wearable device, wherein the method comprises:
collecting a moving track of a user gesture motion in a track recognition area by using a sensor, wherein the track recognition area is an area set in a scan area preset by the sensor, and the track recognition area comprises a gesture recognition area and a gesture sensing area set above the gesture recognition area; and
recognizing a moving track in the gesture recognition area as input information based on area information of the track recognition area, wherein the area information comprises coordinate system information of the track recognition area.

2. The gesture input method for a wearable device based on the claim 1, wherein the wearable device further comprises a display, and the method further comprises:
synchronously mapping the moving track in the track recognition area to the display, wherein the track recognition area is corresponding to an area on the display.

3. The gesture input method for a wearable device according to claim 1 or 2, wherein the collecting a moving track of a user gesture motion in a track recognition area by using a sensor is specifically:
collecting the moving track in the gesture recognition area in the track recognition area by using the sensor; and
the recognizing a moving track as input information based on area information of the track recognition area is specifically:
determining area information of the gesture recognition area based on the area information of the track recognition area; and
recognizing the moving track in the gesture recognition area as the input information based on the area information of the gesture recognition area.

4. The gesture input method for a wearable device according to claim 3, wherein the recognizing the moving track in the gesture recognition area as the input information based on the area information of the gesture recognition area comprises:
determining a recognition reference surface based on the area information of the gesture recognition area;
projecting the moving track in the gesture recognition area onto the recognition reference surface; and
recognizing the moving track projected onto the recognition reference surface as the input information.

5. The gesture input method for a wearable device according to claim 3 or 4, wherein the method further comprises:
when a moving track is detected in the gesture sensing area, displaying a cursor in a current position that is on the display of the wearable device and that is corresponding to the moving track in the gesture sensing area.

6. The gesture input method for a wearable device according to claim 5, wherein the gesture recognition area is in contact with the gesture sensing area, and the gesture recognition area and the gesture sensing area are located above the wearable device.

7. The gesture input method for a wearable device according to claim 1 or 2, wherein the gesture recognition area is a first recognition surface established based on area information of the gesture recognition area, and the recognizing a moving track in the gesture recognition area as input information based on area information of the track recognition area comprises:
recognizing a moving track on the first recognition surface as the input information based on the area information of the gesture recognition area, wherein the first recognition surface is a plane or a curved surface.

8. The gesture input method for a wearable device according to claim 7, wherein the method further comprises:
when it is determined that an included angle between the first recognition surface and a preset recognition surface exceeds a preset angle threshold, sending a prompt for adjusting the first recognition surface.

9. The gesture input method for a wearable device according to claim 7 or 8, wherein the wearable device is a wrist wearable device, and the first recognition surface is located on a hand back of a wearer of the wearable device.

10. The gesture input method for a wearable device according to any one of claims 1 to 9, wherein the sensor is one or more ultrasonic sensors or infrared sensors.

11. A wearable device, comprising:
a sensor, configured to collect a moving track of a user gesture motion in a track recognition area, wherein the track recognition area is an area set in a scan area preset by the sensor, and the track recognition area comprises a gesture recognition area and a gesture sensing area set above the gesture recognition area; and
a recognition module, configured to recognize a moving track in the gesture recognition area as input information based on area information of the track recognition area, wherein the area information comprises coordinate system information of the track recognition area.

12. The wearable device according to claim 11, wherein the wearable device further comprises:
a display, configured to synchronously map the moving track in the track recognition area to the display, wherein the track recognition area is corresponding to an area on the display.

13. The wearable device according to claim 11 or 12, wherein the sensor is specifically configured to:
collect the moving track in the gesture recognition area in the track recognition area; and
the recognition module is specifically configured to:
determine area information of the gesture recognition area based on the area information of the track recognition area; and
recognize the moving track in the gesture recognition area as the input information based on the area information of the gesture recognition area.

14. The wearable device according to claim 13, wherein the recognition module is specifically configured to:
determine a recognition reference surface based on the area information of the gesture recognition area;
project the moving track in the gesture recognition area onto the recognition reference surface; and
recognize the moving track projected onto the recognition reference surface as the input information.

15. The wearable device according to claim 13, wherein the sensor is further specifically configured to detect a moving track in the gesture sensing area; and
the display is further configured to display a cursor in a current position that is on the display and that is corresponding to the moving track in the gesture sensing area.

16. The wearable device according to claim 15, wherein the gesture recognition area is in contact with the gesture sensing area, and the gesture recognition area and the gesture sensing area are located above the wearable device.

17. The wearable device according to claim 11 or 12, wherein the gesture recognition area is a first recognition surface established based on area information of the gesture recognition area, and the recognition module is specifically configured to:
recognize a moving track on the first recognition surface as the input information based on the area information of the gesture recognition area, wherein the first recognition surface is a plane or a curved surface.

18. The wearable device according to claim 17, wherein the wearable device further comprises:
a prompt module, configured to: when it is determined that an included angle between the first recognition surface and a preset recognition surface exceeds a preset angle threshold, send a prompt for adjusting the first recognition surface.

19. The wearable device according to claim 17 or 18, wherein the wearable device is a wrist wearable device, and the first recognition surface is located on a hand back of a wearer of the wearable device.

20. The wearable device according to any one of claims 11 to 19, wherein the sensor is one or more ultrasonic sensors or infrared sensors.

21. A wearable device, comprising a sensor, a processor, and a memory, wherein the sensor is configured to collect a moving track of a user gesture motion, the memory is configured to store an instruction and data that need to be executed by the processor, and the processor is configured to execute the instruction in the memory, so as to recognize a moving track in a gesture recognition area as input information.
